# FASCICULE DE BREVET EUROPEEN

(11) **EP 1 008 540 B1**
(45) Date de publication et mention de la délivrance du brevet: **06.03.2002**
(21) Numéro de dépôt: 99402992.4
(22) Date de dépôt: 01.12.1999
(51) Int. Cl.: B65G 47/52

(54) **Système de transport d'objects à transporteurs croisés**
Fördereinrichtung für Gegenstände mit gekreuzten Förderern
Article conveying device with cross conveyors

(30) Priorité: 09.12.1998 FR 9815524
(43) Date de publication de la demande: 14.06.2000
(73) Titulaire: Fontaine, Jérôme, 45000 Orleans (FR)
(72) Inventeur: Fontaine, Jérôme, 45000 Orleans (FR)
(74) Mandataire: Bonnetat, Christian

(56) Documents cités:
- EP-A- 0 269 495
- DE-C- 415 774

## Description

La présente invention concerne un système de transport d'objets comprenant un transporteur d'amenée desdits objets et au moins un transporteur d'évacuation de ceux-ci, ledit transporteur d'amenée ayant, au moins au voisinage du transporteur d'évacuation, un niveau plus élevé que celui dudit transporteur d'évacuation et une direction croisée par rapport à celle de ce dernier.

Le plus fréquemment, dans les systèmes de transport connus de ce type, les objets amenés par ledit transporteur d'amenée tombent librement, à l'extrémité de celui-ci, sur le transporteur d'évacuation.

Il en résulte que la disposition des objets successifs véhiculés par le transporteur d'évacuation ne peut être précise et que ces objets prennent des positions qui, non seulement ne sont pas centrées par rapport à l'axe longitudinal dudit transporteur d'évacuation, mais encore diffèrent transversalement sur ce dernier.

De tels systèmes de transport connus ne peuvent donc être mis en oeuvre lorsque son transporteur d'évacuation doit alimenter une machine de traitement exigeant qu'à son entrée les objets occupent une position précise (notamment centrale) par rapport à la largeur dudit transporteur d'évacuation.

Par ailleurs, par le document EP-A-0 269 495, on connaît déjà un dispositif pour le transfert d'objets entre un transporteur d'amenée desdits objets et au moins un transporteur d'évacuation desdits objets, ledit transporteur d'amenée ayant, au moins au voisinage dudit transporteur d'évacuation, un niveau plus élevé que celui dudit transporteur d'évacuation et une direction croisée par rapport à celle de ce dernier, ledit dispositif :
- comportant deux bandes sans fin parallèles formant un convoyeur plan ;
- étant disposé en prolongement dudit transporteur d'amenée pour recevoir lesdits objets transportés par celui-ci ;
- étant disposé au-dessus dudit transporteur d'évacuation ; et
- comportant des moyens pour faire pivoter au moins l'une desdites bandes sans fin autour d'un axe longitudinal, afin de permettre l'ouverture du fond dudit convoyeur et d'autoriser l'objet porté par celui-ci à tomber par gravité sur ledit transporteur d'évacuation.

Grâce à un tel dispositif de transfert d'objets ouvrant connu, il est donc théoriquement possible, par commande de l'ouverture dudit dispositif, de laisser tomber chaque objet à un endroit précis de la largeur du transporteur d'évacuation, notamment au voisinage de l'axe longitudinal médian de celui-ci. Cependant, ce dispositif ouvrant connu présente l'inconvénient de ne pas permettre de maîtriser avec précision le temps de chute des objets à partir de l'instant de la commande de l'ouverture, ce temps de chute dépendant alors fortement du centrage de ces derniers sur ledit transporteur d'amenée. Il en résulte, d'une part, que la position transversale desdits objets sur le transporteur d'évacuation ne peut être assurée avec précision et, d'autre part, que des objets qui étaient équidistants l'un de l'autre sur le transporteur d'amenée ne le sont plus sur le transporteur d'évacuation, après transfert.

La présente invention a pour objet de remédier à cet inconvénient.

A cet effet, selon l'invention, le dispositif de transfert décrit ci-dessus est remarquable en ce que lesdites bandes sans fin parallèles, au lieu de former un convoyeur plan, sont inclinées l'une par rapport à l'autre pour former un convoyeur à section en forme de V, ouvert vers le haut.

Ainsi, tous les objets successifs sont amenés à occuper, au moment du transfert, la même position centrale, quelle que soit leur excentration sur le transporteur d'amenée. Il est alors possible de contrôler, non seulement le centrage des objets transférés sur le transporteur d'évacuation, mais encore les espaces mutuels entre lesdits objets sur ce dernier transporteur.

Lesdits moyens de pivotement peuvent être du type à bielle et manivelle, actionnées par au moins un moteur, qui peut être rotatif ou du type vérin. Pour la commande de l'ouverture et/ou de la fermeture dudit dispositif de transfert, il est avantageux de prévoir un capteur susceptible de détecter la présence d'un objet sur ledit dispositif de transfert et de commander en conséquence ledit moteur.

Avantageusement, lesdits moyens de pivotement font pivoter les deux bandes sans fin autour d'axes longitudinaux respectifs, symétriquement par rapport au plan vertical bissecteur desdites bandes sans fin.

On conçoit donc aisément que, grâce à la présente invention, il est possible d'alimenter avec une bonne précision de positionnements longitudinal et transversal, une machine de traitement recevant une pluralité d'objets successifs véhiculés par le transporteur d'évacuation.

Afin d'augmenter encore la précision du positionnement transversal des objets, il est avantageux que ledit transporteur d'amenée soit lui-même constitué, au moins au voisinage dudit transporteur d'évacuation, par un convoyeur à section en forme au moins approximative de V, ouvert vers le haut, de sorte que les objets sont introduits en position transversalement médiane dans ledit dispositif de transfert. Dans ce cas, ce transporteur d'amenée peut être constitué de deux bandes sans fin parallèles, inclinées l'une par rapport à l'autre.

Le dispositif de transfert et le système de transfert conformes à la présente invention peuvent être utilisés dans de nombreux domaines techniques. Cependant, une de leurs applications avantageuses concerne, dans une installation de boulangerie, l'alimentation d'une façonneuse de pâtons qui exige un positionnement précis des pâtons à son entrée. Pour parfaire encore plus la précision de positionnement des pâtons, il est avantageux que ceux-ci, au lieu de se présenter sous la forme d'une boule comme cela est usuel, aient une forme oblongue permettant de les centrer parfaitement par rapport à la largeur dudit transporteur d'amenée à section en forme de V et à celle dudit dispositif de transfert.

Les figures du dessin annexé feront bien comprendre comment l'invention peut être réalisée. Sur ces figures, des références identiques désignent des éléments semblables.

La figure 1 est une vue schématique latérale, suivant la flèche A de la figure 2, d'un système de transfert d'objets conforme à la présente invention.

La figure 2 est une vue de dessus schématique de l'installation de la figure 1.

La figure 3 est une vue schématique, selon la flèche B de la figure 1, illustrant la section du dispositif de transfert ainsi que ses positions fermée (en traits pleins) et ouverte (en traits pointillés).

La figure 4 est une vue schématique illustrant la commande du dispositif de transfert d'objets.

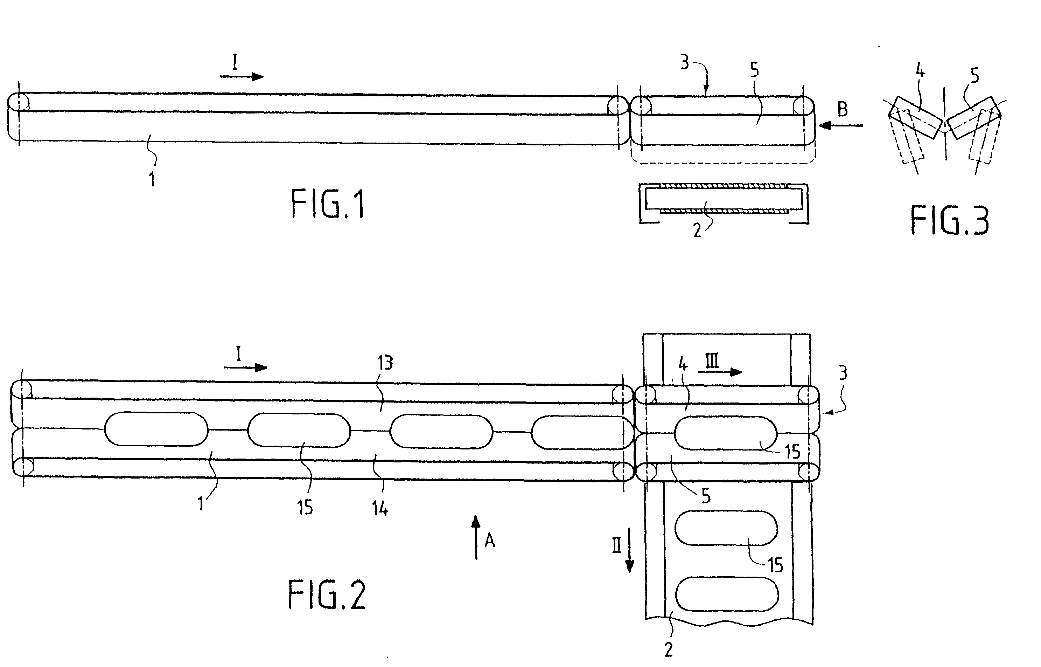

Le système de transport montré par les figures 1 et 2 comprend un transporteur d'amenée 1 et un transporteur d'évacuation 2 de direction sensiblement orthogonale. Le transporteur d'amenée 1 se déplace en direction du transporteur d'évacuation (flèche I) et, au moins au voisinage dudit transporteur d'évacuation 2 qui se déplace selon la flèche II, il a un niveau plus élevé que celui de ce dernier. De plus, il est prolongé, au-dessus dudit transporteur d'évacuation 2, par un dispositif de transfert 3 se déplaçant (flèche III) dans le même sens que ledit transporteur à amenée 1.

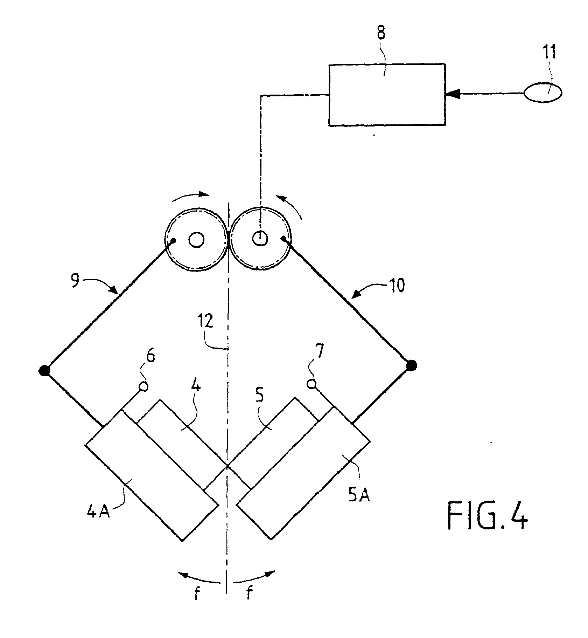

Le dispositif de transfert 3 comporte deux bandes sans fin parallèles 4 et 5, inclinées l'une par rapport à l'autre pour former un convoyeur en forme de V ouvert vers le haut. Les bandes sans fin 4 et 5 sont respectivement montées dans des bâtis 4A et 5A (non représentés sur la figure 3), qui sont articulés autour d'axes longitudinaux de pivotement 6 et 7, respectivement (voir la figure 4), et qui sont commandés en pivotement par l'intermédiaire d'un moteur 8 et de systèmes à bielle et manivelle 9 et 10 respectivement.

Le moteur 8 est lui-même contrôlé par une cellule électrique 11 destiné à détecter la présence d'objets à une position précise sur le dispositif de transfert 3.

Comme l'illustre la figure 4, les deux bandes sans fin 4 et 5 peuvent pivoter de façon symétrique par rapport au plan vertical bissecteur 12 du dispositif de transfert 3.

Dans le mode de réalisation représenté sur les figures 1 et 2, le transporteur d'amenée 1 est constitué de deux bandes sans fin parallèles 13 et 14 formant un convoyeur en forme au moins approximative de V, ouvert vers le haut. De plus, on a supposé que les objets 15 transportés étaient de forme oblongue. Ainsi, les objets 15 véhiculés par le transporteur d'amenée 1 sont centrés par rapport à celui-ci et sont présentés, déjà en position centrée, au dispositif de transfert 3. Lorsque la cellule 11 détecte la présence d'un objet 15 sur le dispositif de transfert 3, elle actionne le moteur 8 pour que les deux bandes sans fin 4 et 5 constitutives dudit dispositif de transfert 3 s'écartent l'une de l'autre (voir la figure 3 et les flèches f de la figure 4) pour que l'objet 15 tombe sur le transporteur d'évacuation 12. Dès que l'objet 15 est tombé, ledit dispositif de transfert se referme, également sous l'action du moteur 8 et est prêt à accueillir l'objet 15 suivant.

On comprendra aisément qu'ainsi il est possible de faire tomber les objets 15 à un endroit longitudinalement et transversalement précis du transporteur d'évacuation 2. Celui-ci peut donc adresser lesdits objets 15 (par exemple des pâtons) à une machine de traitement (par exemple une façonneuse de pâtons) non représentée, dans de bonnes conditions de positionnement d'entrée.

## Revendications

1. Dispositif (3) pour le transfert d'objets (15) entre un transporteur (1) d'amenée desdits objets et au moins un transporteur (2) d'évacuation desdits objets, ledit transporteur d'amenée (1) ayant, au moins au voisinage dudit transporteur d'évacuation (2), un niveau plus élevé que celui dudit transporteur d'évacuation (2) et une direction croisée par rapport à celle de ce dernier, ledit dispositif :
- comportant deux bandes sans fin parallèles (4, 5) formant un convoyeur ;
- étant disposé en prolongement dudit transporteur d'amenée (1) pour recevoir lesdits objets (15) transportés par celui-ci ;
- étant disposé au-dessus dudit transporteur d'évacuation (2) ; et
- comportant des moyens (6 à 11) pour faire pivoter au moins l'une desdites bandes sans fin (4, 5) autour d'un axe longitudinal (6, 7), afin de permettre l'ouverture du fond dudit convoyeur (4, 5) et d'autoriser l'objet (15) porté par celui-ci à tomber par gravité sur ledit transporteur d'évacuation (2),
**caractérisé en ce que** lesdites bandes sans fin parallèles (4, 5) sont inclinées l'une par rapport à l'autre pour former un convoyeur à section en forme de V, ouvert vers le haut.

2. Dispositif selon la revendication 1,
**caractérisé en ce que** lesdits moyens de pivotement sont du type à bielle et manivelle (9, 10), actionnées par au moins un moteur (8).

3. Dispositif selon la revendication 2,
**caractérisé en ce que** lesdits moyens de pivotement comportent un capteur (11), susceptible de détecter la présence d'un objet (15) sur ledit dispositif de transfert (3) et de commander ledit moteur (8).

4. Dispositif selon l'une quelconque des revendications 1 à 3,
**caractérisé en ce que** lesdits moyens de pivotement (6 à 11) font pivoter les deux bandes sans fin (4, 5) autour d'axes longitudinaux respectifs (6, 7), symétriquement par rapport au plan vertical bissecteur (12) desdites bandes sans fin.

5. Système de transport d'objets (15) comprenant un transporteur (1) d'amenée desdits objets et au moins un transporteur (2) d'évacuation desdits objets, ledit transporteur d'amenée ayant, au moins au voisinage dudit transporteur d'évacuation, un niveau plus élevé que celui dudit transporteur d'évacuation et une direction croisée par rapport à celle de ce dernier, ledit système comportant un dispositif (3) de transfert d'objets :
- comportant deux bandes sans fin parallèles (4, 5), formant un convoyeur ;
- étant disposé en prolongement dudit transporteur d'amenée (1) pour recevoir lesdits objets (15) transportés par celui-ci ;
- étant disposé au-dessus dudit transporteur d'évacuation (2) ; et
- comportant des moyens (6 à 11) pour faire pivoter au moins l'une desdites bandes sans fin (4, 5) autour d'un axe longitudinal (6, 7), afin de permettre l'ouverture du fond dudit convoyeur et d'autoriser l'objet (15) porté par celui-ci à tomber par gravité sur ledit transporteur d'évacuation (2),
**caractérisé en ce que** lesdites bandes sans fin parallèles (4, 5) du dispositif (3) de transfert d'objets sont inclinées l'une par rapport à l'autre pour former un convoyeur à section en forme de V, ouvert vers le haut.

6. Système selon la revendication 5,
**caractérisé en ce que** ledit dispositif de transfert (3) comporte de plus les particularités spécifiées sous l'une quelconque des revendications 2, 3 ou 4.

7. Système selon l'une des revendications 5 ou 6,
**caractérisé en ce que** ledit transporteur d'amenée (1) est lui-même constitué, au moins au voisinage dudit transporteur d'évacuation (2), par un convoyeur à section en forme au moins approximative de V, ouvert vers le haut.

8. Système selon la revendication 7,
**caractérisé en ce que** ledit transporteur d'amenée (1) en forme au moins approximative de V comporte deux bandes sans fin (13, 14) parallèles, inclinées l'une par rapport à l'autre.

9. Installation de boulangerie pour la fabrication de pains, comportant une façonneuse de pâtons alimentée en pâtons (15) par un système de transport (1, 2, 3),
**caractérisée en ce que** ledit système de transport comporte les particularités spécifiées sous l'une quelconque des revendications 5 à 8.

10. Installation selon la revendication 9,
**caractérisée en ce que** lesdits pâtons (15) fournis à ladite façonneuse présentent une forme oblongue.

## Claims

1. Device (3) for transferring objects (15) between an inward conveyor (1) of the said objects and at least one outward conveyor (2) of the said objects, the said inward conveyor (1) having, at least in the vicinity of the said outward conveyor (2), a higher level than the said outward conveyor (2) and an intersecting direction with respect to the direction of the latter, the said device:
- comprising two endless parallel belts (4, 5) forming a conveying means;
- being arranged in the continuation of the said inward conveyor (1) so as to receive the said objects (15) conveyed by the latter;
- being arranged above the said outward conveyor (2); and
- comprising means (6 to 11) for pivoting at least one of the said endless belts (4, 5) about a longitudinal axis (6, 7), in order to open the bottom of the said conveying means (4, 5) and allow the object (15) which it is carrying to fall under gravity onto the said outward conveyor (2),
**characterized in that** the said endless parallel belts (4, 5) are inclined with respect to each other to form an upwardly open V-section conveying means.

2. Device according to Claim 1, **characterized in that** the said pivoting means are of the crank-and-connecting-rod type (9, 10) actuated by at least one motor (8).

3. Device according to Claim 2, **characterized in that** the said pivoting means comprise a sensor (11) capable of detecting the presence of an object (15) on the said transfer device (3) and operating the said motor (8).

4. Device according to any one of Claims 1 to 3, **characterized in that** the said pivoting means (6 to 11) cause the two endless belts (4, 5) to pivot about respective longitudinal axes (6, 7), symmetrically with respect to the vertical plane (12) bisecting the said endless belts.

5. System for conveying objects (15) comprising an inward conveyor (1) of the said objects and at least one outward conveyor (2) of the said objects, the said inward conveyor having, at least in the vicinity of the said outward conveyor, a higher level than the said outward conveyor and an intersecting direction with respect to the direction of the latter, the said system comprising a device (3) for transferring objects:
- comprising two endless parallel belts (4, 5) forming a conveying means;
- being arranged in the continuation of the said inward conveyor (1) so as to receive the said objects (15) conveyed by the latter;
- being arranged above the said outward conveyor (2); and
- comprising means (6 to 11) for pivoting at least one of the said endless belts (4, 5) about a longitudinal axis (6, 7), in order to open the bottom of the said conveying means and allow the object (15) which it is carrying to fall under gravity onto the said outward conveyor (2),
**characterized in that** the said endless parallel belts (4, 5) of the device (3) for transferring objects are inclined with respect to each other to form an upwardly open V-section conveying means.

6. System according to Claim 5, **characterized in that** the said transfer device (3) comprises in addition the features specified under any one of Claims 2, 3 and 4.

7. System according to either of Claims 5 and 6,
**characterized in that** the said inward conveyor (1) is itself, at least in the vicinity of the said outward conveyor (2), an upwardly open, at least approximately V-section conveying means.

8. System according to Claim 7, **characterized in that** the said at least approximately V-shaped inward conveyor (1) comprises two endless parallel belts (13, 14) inclined with respect to each other.

9. Bakery installation for producing loaves of bread, comprising a moulder of pieces of dough, which is fed with pieces of dough (15) by a conveying system (1, 2, 3), **characterized in that** the said conveying system comprises the features specified under any one of Claims 5 to 8.

10. Installation according to Claim 9, **characterized in that** the said pieces of dough (15) supplied to the said moulder are oblong in shape.

## Patentansprüche

1. Vorrichtung (3) zur Übergabe von Gegenständen (15) zwischen einem Förderer (1) zur Zuführung der genannten Gegenstände und mindestens einem Förderer zum Austragen der genannten Gegenstände, wobei der genannte Zuführungsförderer (1) zumindest im Bereich des genannten Austragförderers (2) höher liegt als der genannte Austragförderer (2) und eine zur Richtung des letzteren querliegende Richtung besitzt, wobei die genannte Vorrichtung
- zwei parallele Endlosbänder (4, 5) umfasst, die ein Förderband bilden;
- in Verlängerung des genannten Zuführungsförderers (1) angeordnet ist, um die genannten, von diesem transportierten Gegenstände (15) aufzunehmen;
- über dem genannten Austragförderer (2) angeordnet ist und
- Mittel (6 bis 11) umfasst, um mindestens eines der genannten Endlosbänder (4, 5) um eine Längsachse (6, 7) schwenken zu lassen, um das Öffnen des Bodens des genannten Förderbands zu ermöglichen und dem von diesem getragenen Gegenstand (15) zu gestatten, durch Schwerkraft auf den genannten Austragförderer (2) zu fallen,
**dadurch gekennzeichnet, dass** die genannten parallelen Endlosbänder (4, 5) zueinander geneigt sind, um ein Förderband mit keilförmigem Querschnitt zu bilden, das nach oben offen ist.

2. Vorrichtung gemäss Anspruch 1,
**dadurch gekennzeichnet, dass** die genannten Schwenkmittel vom Typ mit Pleuel- und Kurbelstange (9, 10) sind, die von mindestens einem Motor (8) betätigt werden.

3. Vorrichtung gemäss Anspruch 2,
**dadurch gekennzeichnet, dass** die genannten Schwenkmittel einen Sensor (11) umfassen, der das Vorhandensein eines Gegenstands (15) auf der Übergabevorrichtung (3) erkennen und den genannten Motor (8) steuern kann

4. Vorrichtung gemäss einem beliebigen der Ansprüche 1 bis 3,
**dadurch gekennzeichnet, dass** die genannten Schwenkmittel (6 bis 11) die beiden Endlosbänder (4, 5) um jeweilige Längsachsen (6, 7) schwenken lassen, die symmetrisch zur halbierenden senkrechten Ebene (12) der genannten Endlosbänder liegen.

5. System zum Transport von Gegenständen (15), das einen Förderer (1) zur Zuführung der genannten Gegenstände und mindestens einen Förderer (2) zum Austragen der genannten Gegenstände umfasst, wobei der genannte Zuführungsförderer zumindest im Bereich des genannten Austragförderers höher liegt als der genannte Austragförderer und eine zur Richtung des letzteren querliegende Richtung besitzt, wobei das genannte System eine Vorrichtung (3) zur Übergabe von Gegenständen umfasst, die
- zwei parallele Endlosbänder (4, 5) umfasst, die ein Förderband bilden;
- in Verlängerung des genannten Zuführungsförderers (1) angeordnet ist, um die genannten, von diesem transportierten Gegenstände (15) aufzunehmen;
- über dem genannten Austragförderer (2) angeordnet ist und
- Mittel (6 bis 11) umfasst, um mindestens eines der genannten Endlosbänder (4, 5) um eine Längsachse (6, 7) schwenken zu lassen, um das Öffnen des Bodens des genannten Förderbands zu ermöglichen und es dem von diesem getragenen Gegenstand (15) zu gestatten, durch Schwerkraft auf den genannten Austragförderer (2) zu fallen,
**dadurch gekennzeichnet, dass** die genannten parallelen Endlosbänder (4, 5) der Vorrichtung (3) zur Übergabe von Gegenständen zueinander geneigt sind, um ein Förderband mit keilförmigem Querschnitt zu bilden, das nach oben offen ist.

6. System gemäss Anspruch 5,
**dadurch gekennzeichnet, dass** die genannte Übergabevorrichtung (3) weiterhin die unter einem beliebigen der Ansprüche 2 ,3 oder 4 spezifizierten Besonderheiten umfasst.

7. System gemäss einem der Ansprüche 5 oder 6,
**dadurch gekennzeichnet, dass** der genannte Zuführungsförderer (1) selbst zumindest im Bereich des genannten Austragförderers (2) aus einem nach oben offenen Förderer mit zumindest annähernd keilförmigen Querschnitt besteht.

8. System gemäss Anspruch 7,
**dadurch gekennzeichnet, dass** der genannte zumindest annähernd keilförmige Zuführungsförderer (1) zwei parallele Endlosbänder (13, 14) umfasst, die zueinander geneigt sind.

9. Bäckereianlage zur Herstellung von Brot, die eine Teigstückformmaschine umfasst, der von einem Transportsystem (1, 2, 3) Teigstücke zugeführt werden,
**dadurch gekennzeichnet, dass** das genannte Transportsystem die in einem beliebigen der Ansprüche 5 bis 8 spezifizierten Besonderheiten umfasst.

10. Anlage gemäss Anspruch 9,
**dadurch gekennzeichnet, dass** die der genannten Formmaschine zugeführten genannten Teigstücke (15) eine längliche Form besitzen.
